# EUROPÄISCHE PATENTSCHRIFT

(11) **EP 2 862 093 B1**
(45) Veröffentlichungstag und Bekanntmachung des Hinweises auf die Patenterteilung: **12.07.2017**
(21) Anmeldenummer: 13722752.6
(22) Anmeldetag: 15.05.2013
(51) Int. Cl.: G06F 13/40, H04L 12/40

(54) **SENSORANORDNUNG FÜR EINE ELEKTRIK/ELEKTRONIK-ARCHITEKTUR UND ZUGEHÖRIGE ELEKTRIK/ELEKTRONIK-ARCHITEKTUR FÜR EIN FAHRZEUG**
SENSOR ARRANGEMENT FOR AN ELECTRIC/ELECTRONIC ARCHITECTURE AND ASSOCIATED ELECTRIC/ELECTRONIC ARCHITECTURE FOR A VEHICLE
SYSTÈME DE CAPTEURS DESTINÉ À UNE ARCHITECTURE ÉLECTRIQUE/ÉLECTRONIQUE ET ARCHITECTURE ÉLECTRIQUE/ÉLECTRONIQUE CORRESPONDANTE POUR UN VÉHICULE

(30) Priorität: 15.06.2012 DE 102012210106
(43) Veröffentlichungstag der Anmeldung: 22.04.2015
(73) Patentinhaber: Robert Bosch GmbH, 70442 Stuttgart (DE)
(72) Erfinder: KORNHAAS, Robert, 73565 Spraitbach (DE)
(86) Internationale Anmeldenummer: PCT/EP2013/060001
(87) Internationale Veröffentlichungsnummer: WO 2013/185999

(56) Entgegenhaltungen:
- EP-A2- 1 251 432
- WO-A1-02/092395
- US-A1- 2004 162 653
- US-A1- 2007 233 919
- US-A1- 2009 292 841
- US-A1- 2012 059 562

## Beschreibung

### Stand der Technik

Die Erfindung betrifft eine Sensoranordnung für eine Elektrik/ElektronikArchitektur in einem Fahrzeug nach der Gattung des unabhängigen Patentanspruchs 1 und eine zugehörige Elektrik/Elektronik-Architektur für ein Fahrzeug.

Derzeitige Elektrik/Elektronik-Architekturen weisen zwischen einem Sensorcluster bzw. einer Sensoranordnung und einem ESP-Steuergerät (ESP: Elektronisches Stabilitätsprogramm) eine CAN-Verbindung auf. Das bedeutet, dass alle Teilnehmer am CAN-Bus in der Lage sind, direkt Daten bzw. Informationen aus dem Sensorcluster zu empfangen. Neue Elektrik/Elektronik-Architekturen mit einem Sensorcluster, welches entweder im ESP-Steuergerät oder in einem AirbagSteuergerät integriert ist, weisen den Nachteil auf, das keine direkte Verbindung mehr zwischen dem Sensorcluster und anderen Teilnehmern besteht, sondern alle Signale je nach Integrationsort zuerst über das ESP-Steuergerät oder das Airbag-Steuergerät geroutet werden müssen. Zudem tritt bei einer Integration des Sensorclusters in das Airbag-Steuergerät der Nachteil auf, dass das AirbagSteuergerät durch einen weiteren Grund neben der Zentralsensorik zur Plausibilisierung einer Auslöseentscheidung, ortsgebunden ist. Das bedeutet, dass das Airbag-Steuergerät nicht "frei" im Fahrzeug verbaut werden kann und somit einen Ort im Fahrzeug belegt, welcher nahe am Fahrer ist und somit prädestiniert für Bedienungs- und Komfortsysteme ist.

### Offenbarung der Erfindung

Die erfindungsgemäße Sensoranordnung für eine Elektrik/Elektronik-Architektur mit den Merkmalen des unabhängigen Patentanspruchs 1 und die zugehörige Elektrik/Elektronik-Architektur für ein Fahrzeug weisen demgegenüber den Vorteil auf, dass die Kommunikation aller Botschaften in Form von Informationen bzw. Daten des mindestens einen Sensormoduls gleichzeitig auf zwei unterschiedlichen Bussystemen erfolgen kann, so dass allen Teilnehmern des ersten Bussystems und allen Teilnehmern des zweiten Bussystem die Informationen bzw. Daten des mindestens einen Sensormoduls zur Verfügung stehen.

Ausführungsformen der erfindungsgemäßen Sensoranordnung für eine Elektrik/Elektronik-Architektur weisen in vorteilhafter Weise geringe Latenzzeiten zwischen Sensierung, d.h. Erfassung der physikalischen Größe, und Nachrichtenübermittlung, d.h. Übertragung der zugehörigen Informationen bzw. Daten auf.

Bei Ausführungsformen der erfindungsgemäßen Elektrik/Elektronik-Architektur mit einem Airbag-Steuergerät und einem ESP-Steuergerät (ESP: Elektronisches Stabilitätsprogramm) kann ein bereits verwendetes ESP-Steuergerät mit einer CAN-Schnittstelle weiter verwendet werden. In vorteilhafter Weise stehen Informationen bzw. Daten eines ESP-Sensormoduls und eines Airbag-Sensormoduls allen CAN-Busteilnehmern zur Verfügung. Außerdem ergeben sich bei Ausführungsformen der erfindungsgemäßen Elektrik/Elektronik-Architektur keine Verzögerung der Botschaften durch Routing über das Airbag-Steuergerät bzw. das ESP-Steuergerät. Außerdem ergibt sich in vorteilhafter Weise nur eine geringe organisatorische Verkopplung der Airbag-Funktion und der ESP-Funktion.

Des Weiteren ermöglichen Ausführungsformen der vorliegenden Erfindung eine freie Auswahl der Verbauorte der einzelnen Komponenten der erfindungsgemäßen Elektrik/Elektronik-Architektur. Dadurch können die Verbauorte in vorteilhafter Weise unter den Aspekten geringer Platzbedarf der ortsfesten Komponenten bezüglich Airbag-Funktion und ESP-Funktion, geringer Verkabelungsaufwand und Mechanikaufwand ausgewählt werden. So kann insbesondere das Airbagsteuergerät ohne Berücksichtigung der Einbaulage der Sensoranordnung bzw. der Zentralsensorik frei im Fahrzeug platziert werden.

Ausführungsformen der vorliegenden Erfindung stellen eine Sensoranordnung für eine Elektrik/Elektronik-Architektur in einem Fahrzeug zur Verfügung, welche mindestens ein Sensormodul zur Erfassung von mindestens einer physikalischen Größe und mindestens eine erste Schnittstelle zur Kommunikation mit einem ersten Bussystem umfasst. Erfindungsgemäß ist mindestens eine zweite Schnittstelle zur Kommunikation mit einem zweiten Bussystem vorgesehen, wobei Daten des mindestens einen Sensormoduls über beide Bussysteme ausgebbar sind.

Des Weiteren wird eine Elektrik/Elektronik-Architektur für ein Fahrzeug mit einem ersten Steuergerät, einem zweiten Steuergerät und einer erfindungsgemäßen Sensoranordnung vorgeschlagen.

Durch die in den abhängigen Patentansprüchen aufgeführten Maßnahmen und Weiterbildungen sind vorteilhafte Verbesserungen der im unabhängigen Patentanspruch 1 angegebenen Sensoranordnung für eine Elektrik/ElektronikArchitektur und der im unabhängigen Patentanspruch 8 angegebenen Elektrik/Elektronik-Architektur möglich.

Besonders vorteilhaft ist, dass ein erstes Sensormodul und ein zweites Sensormodul zur Erfassung von mindestens einer physikalischen Größe vorgesehen werden kann. Dadurch können in vorteilhafter Weise Daten des ersten Sensormoduls zur Plausibilisierung von Daten des zweiten Sensormoduls ausgewertet werden und umgekehrt.

In vorteilhafter Ausgestaltung der erfindungsgemäßen Sensoranordnung kann eine Versorgungsleitung die erste Schnittstelle und das erste Sensormodul und einen Spannungsregler mit Energie versorgen. Zudem kann der Spannungsregler die zweite Schnittstelle und das zweite Sensormodul mit Energie versorgen. Dadurch wird in vorteilhafter Weise die Versorgung von zwei getrennten Kommunikationsbussystemen über eine Kommunikationsleitung ermöglicht, so dass bei Ausführungsformen der erfindungsgemäßen Sensoranordnung Anschlusspins eingespart werden können.

In weiterer vorteilhafter Ausgestaltung der erfindungsgemäßen Sensoranordnung kann das erste Bussystem als PSI5-Bussystem und das zweite Bussystem kann als CAN-Bussystem ausgeführt werden. Bei dem als PSI5-Bussystem ausgeführten ersten Bussystem kann eine Leitung als Versorgungsleitung ausgeführt werden.

In vorteilhafter Ausgestaltung der erfindungsgemäßen Elektrik/ElektronikArchitektur kann das erste Steuergerät über das erste Bussystem und das zweite Steuergerät kann über das zweite Bussystem mit der Sensoranordnung kommunizieren. Das erste Steuergerät kann beispielsweise als Airbag-Steuergerät und das zweite Steuergerät kann beispielsweise als ESP-Steuergerät ausgeführt werden.

Bei der Ausführung des ersten Bussystem als PSI5-Bussystem und des zweiten Bussystems als CAN-Bussystem kann die Versorgung des Spannungsreglers für einen Mikrocontroller an einer Plus-Leitung der PSI5-Bussystems angeschlossen werden, so dass das PSI5-Bussystem direkt eine als PSI5-Schnittstelle ausgeführte erste Schnittstelle und den Spannungsregler und indirekt ein erstes Sensormodul versorgt, welches als Airbag-Sensormodul ausgeführt ist. Über den Spannungsregler versorgt das als PSI5-Bussystem ausgeführte erste Bussystem indirekt den Mikrocontroller, die zweite Schnittstelle und ein als ESP-Sensormodul ausgeführtes zweites Sensormodul. Das bedeutet, dass für Ausführungsformen der erfindungsgemäßen Elektrik/Elektronik-Architektur nur vier Anschlusspins und ein Anschlusskabel für die Sensoranordnung erforderlich sind, aber in vorteilhafter Weise trotzdem die volle Kommunikationsfähigkeit auf zwei unterschiedlichen Bussystemen (CAN, PSI5) möglich ist.

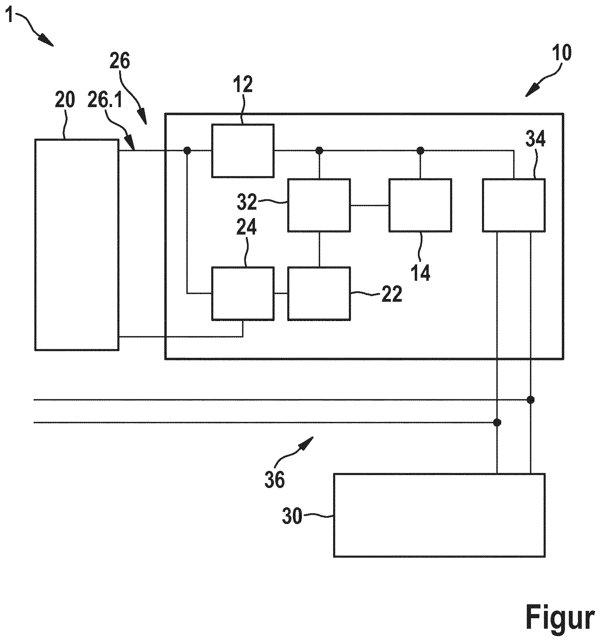

Ein Ausführungsbeispiel der Erfindung ist in der Zeichnung dargestellt und wird in der nachfolgenden Beschreibung näher erläutert.

### Kurze Beschreibung der Zeichnungen

Die einzige Figur zeigt ein schematisches Blockdiagramm eines Ausführungsbeispiels einer erfindungsgemäßen Elektronikarchitektur, insbesondere für ein Fahrzeug.

### Ausführungsformen der Erfindung

Wie aus der Figur ersichtlich ist, umfasst das dargestellte Ausführungsbeispiel einer erfindungsgemäßen Elektrik/Elektronik-Architektur 1 eine Sensoranordnung 10, ein erstes Steuergerät 20 und ein zweites Steuergerät 30.

Wie aus der Figur weiter ersichtlich ist, umfasst die erfindungsgemäße Sensoranordnung 1 mindestens ein Sensormodul 22, 32 zur Erfassung von mindestens einer physikalischen Größe und mindestens eine erste Schnittstelle 24 zur Kommunikation mit einem ersten Bussystem 26. Erfindungsgemäß ist mindestens eine zweite Schnittstelle 34 zur Kommunikation mit einem zweiten Bussystem 36 vorgesehen, wobei Daten des mindestens einen Sensormoduls 22, 32 über beide Bussysteme 26, 36 ausgegeben werden.

Im dargestellten Ausführungsbeispiel ist das erste Steuergerät 20 als Airbag-Steuergerät ausgeführt, und das zweite Steuergerät 30 ist als ESP-Steuergerät ausgeführt. Hierbei kommuniziert das erste Steuergerät 20 über das erste Bussystem 26 mit der Sensoranordnung 10, und das zweite Steuergerät 30 kommuniziert über das zweite Bussystem 36 mit der Sensoranordnung. Das erste Bussystem 26 ist im dargestellten Ausführungsbeispiel als PSI5-Bussystem und das zweite Bussystem 36 ist als CAN-Bussystem ausgeführt.

Wie aus der Figur weiter ersichtlich ist, umfasst das dargestellte Ausführungsbeispiel der erfindungsgemäßen Sensoranordnung 10 ein erstes Sensormodul 22 zur Erfassung von mindestens einer physikalischen Größe für das AirbagSteuergerät 20 und ein zweites Sensormodul 32 zur Erfassung von mindestens einer physikalischen Größe für das ESP-Steuergerät 30.

Somit umfasst das dargestellte Ausführungsbeispiel der erfindungsgemäßen Sensoranordnung 10 alle für die Airbag-Funktion und die ESP-Funktion erforderlichen Module zur Sensierung und Ausgabe der erforderlichen Werte, wie Airbag-Sensormodul 22, PSI5-Schnittstelle 24, ESP-Sensormodul 32, ESP-Schnittstelle 34, sowie einen Spannungsregler 12 und einen Mikrocontroller 14 zur Aufbereitung und/oder Auswertung der Informationen bzw. Daten und zur Steuerung der Funktionen der Sensoranordnung 10. Die Versorgung des Spannungsreglers 12 für den Mikrocontroller 14 wird an eine Plus-Leitung 26.1 des PSI5-Bussystems 26 angeschlossen, d.h. das PSI5-Bussystem 26 übernimmt die Energieversorgung der PSI5-Kommunikation bzw. der PSI5-Schnittstelle 24 und des Spannungsreglers 12 und somit indirekt die Energieversorgung des Airbag-Sensormoduls 22, des Mikrocontrollers 14, der CAN-Schnittstelle 34 und des ESP-Sensormoduls 32. Das bedeutet, dass für das dargestellte Ausführungsbeispiel der Sensoranordnung 10 nur vier Anschlusspins und ein Anschlusskabel erforderlich sind und trotzdem die volle Kommunikationsfähigkeit auf zwei unterschiedlichen Bussystemen 26, 36 (CAN, PSI5) möglich ist. Weiterhin können durch die Verbindung zwischen den beiden Sensormodulen 22, 32 eine gegenseitige Plausibilisierung der mindestens einen erfassten physikalischen Größe durchgeführt und/oder Botschaften in das andere Bussystem 26, 36 gesendet werden.

Im dargestellten Ausführungsbeispiel erfolgt die Kommunikation mit dem AirbagSteuergerät 20 mittels PSI5-Protokoll, und die Kommunikation mit dem ESP-Steuergerät 20 erfolgt mittels CAN-Protokoll. An den Bussystem 26, 36 können noch weitere Busteilnehmer angeschlossen sein. Durch die oben beschriebene Maßnahmen mit der Verkopplung der Sensormodule 22, 32 können in beiden Bussystemen alle Informationen bzw. Daten des Airbag-Sensormoduls 22 und des ESP-Sensormoduls empfangen werden und brauchen nicht noch geroutet zu werden.

## Patentansprüche

1. Sensoranordnung für eine Elektrik/Elektronik-Architektur in einem Fahrzeug mit mindestens einem Sensormodul (22, 32) zur Erfassung von mindestens einer physikalischen Größe und mindestens einer ersten Schnittstelle (24) zur Kommunikation mit einem ersten Bussystem (26), **gekennzeichnet durch** mindestens eine zweite Schnittstelle (34) zur Kommunikation mit einem zweiten Bussystem (36), wobei Daten des mindestens einen Sensormoduls (22, 32) über beide Bussysteme (26, 36) ausgebbar sind.

2. Sensoranordnung nach Anspruch 1, **dadurch gekennzeichnet, dass** ein erstes Sensormodul (22) und ein zweites Sensormodul (32) zur Erfassung von mindestens einer physikalischen Größe vorgesehen sind.

3. Sensoranordnung nach Anspruch 2, **dadurch gekennzeichnet, dass** Daten des ersten Sensormoduls (22) zur Plausibilisierung von Daten des zweiten Sensormoduls (32) auswertbar sind und umgekehrt.

4. Sensoranordnung nach einem der Ansprüche 1 bis 3, **dadurch gekennzeichnet, dass** eine Versorgungsleitung (26.1) die erste Schnittstelle (24) und das erste Sensormodul (22) und einen Spannungsregler (12) mit Energie versorgt.

5. Sensoranordnung nach Anspruch 4, **dadurch gekennzeichnet, dass** der Spannungsregler (12) die zweite Schnittstelle (34) und das zweite Sensormodul (32) mit Energie versorgt.

6. Sensoranordnung nach einem der Ansprüche 1 bis 5, **dadurch gekennzeichnet, dass** das erste Bussystem (26) als PSI5-Bussystem und das zweite Bussystem (36) als CAN-Bussystem ausgeführt ist.

7. Sensoranordnung nach Anspruch 6, **dadurch gekennzeichnet, dass** eine Leitung des als PSI5-Bussystem ausgeführten ersten Bussystems (26) als Versorgungsleitung (26.1) ausgeführt ist.

8. Elektrik/Elektronik-Architektur für ein Fahrzeug mit einem ersten Steuergerät (20), einem zweiten Steuergerät (30) und einer Sensoranordnung (10), wobei die Steuergeräte (20, 30) über mindestens ein Bussystem (26, 36) mit der Sensoranordnung (10) kommunizieren, **dadurch gekennzeichnet, dass** die Sensoranordnung (10) nach einem der Ansprüche 1 bis 7 ausgeführt ist.

9. Elektrik/Elektronik-Architektur nach Anspruch 8, **dadurch gekennzeichnet, dass** das erste Steuergerät (20) über das erste Bussystem (26) und das zweite Steuergerät (30) über das zweite Bussystem (36) mit der Sensoranordnung (10) kommuniziert.

10. Elektrik/Elektronik-Architektur nach Anspruch 9, **dadurch gekennzeichnet, dass** das erste Steuergerät (20) als Airbag-Steuergerät und das zweite Steuergerät (30) als ESP-Steuergerät ausgeführt ist.

## Claims

1. Sensor arrangement for an electric/electronic architecture in a vehicle, having at least one sensor module (22, 32) for recording at least one physical variable and at least one first interface (24) for communicating with a first bus system (26), **characterized by** at least one second interface (34) for communicating with a second bus system (36), data from the at least one sensor module (22, 32) being able to be output via both bus systems (26, 36).

2. Sensor arrangement according to Claim 1, **characterized in that** a first sensor module (22) and a second sensor module (32) are provided for the purpose of recording at least one physical variable.

3. Sensor arrangement according to Claim 2, **characterized in that** data from the first sensor module (22) can be evaluated in order to check the plausibility of data from the second sensor module (32) and vice versa.

4. Sensor arrangement according to one of Claims 1 to 3, **characterized in that** a supply line (26.1) supplies the first interface (24) and the first sensor module (22) and a voltage regulator (12) with energy.

5. Sensor arrangement according to Claim 4, **characterized in that** the voltage regulator (12) supplies the second interface (34) and the second sensor module (32) with energy.

6. Sensor arrangement according to one of Claims 1 to 5, **characterized in that** the first bus system (26) is in the form of a PSI5 bus system and the second bus system (36) is in the form of a CAN bus system.

7. Sensor arrangement according to Claim 6, **characterized in that** a line of the first bus system (26) in the form of the PSI5 bus system is in the form of a supply line (26.1).

8. Electric/electronic architecture for a vehicle, having a first control device (20), a second control device (30) and a sensor arrangement (10), the control devices (20, 30) communicating with the sensor arrangement (10) via at least one bus system (26, 36), **characterized in that** the sensor arrangement (10) is designed according to one of Claims 1 to 7.

9. Electric/electronic architecture according to Claim 8, **characterized in that** the first control device (20) communicates with the sensor arrangement (10) via the first bus system (26) and the second control device (30) communicates with the sensor arrangement (10) via the second bus system (36).

10. Electric/electronic architecture according to Claim 9, **characterized in that** the first control device (20) is in the form of an airbag control device and the second control device (30) is in the form of an ESP control device.

## Revendications

1. Système de capteurs destiné à une architecture électrique/électronique dans un véhicule, comportant au moins un module de capteur (22, 32) destiné à détecter au moins une grandeur physique et au moins une première interface (24) destinée à communiquer avec un premier système de bus (26), **caractérisé par** au moins une deuxième interface (34) destinée à communiquer avec un deuxième système de bus (36), dans lequel des données de l'au moins un module de capteur (22, 32) peuvent être délivrées par l'intermédiaire des deux systèmes de bus (26, 36).

2. Système de capteurs selon la revendication 1, **caractérisé en ce qu'**il est prévu un premier module de capteur (22) et un deuxième module de capteur (32) destinés à détecter au moins une grandeur physique.

3. Système de capteurs selon la revendication 2, **caractérisé en ce que** des données du premier module de capteur (22) peuvent être évaluées pour déterminer la plausibilité de données du deuxième module de capteur (32) et inversement.

4. Système de capteurs selon l'une quelconque des revendications 1 à 3, **caractérisé en ce qu'**une ligne d'alimentation (26.1) alimente en énergie la première interface (24) et le premier module de capteur (22) ainsi qu'un régulateur de tension (12).

5. Système de capteurs selon la revendication 4, **caractérisé en ce que** le régulateur de tension (12) alimente en énergie la deuxième interface (34) et le deuxième module de capteur (32).

6. Système de capteurs selon l'une quelconque des revendications 1 à 5, **caractérisé en ce que** le premier système de bus (26) est réalisé sous la forme d'un système de bus PSI5 et **en ce que** le deuxième système de bus (36) est réalisé sous la forme d'un système de bus CAN.

7. Système de capteurs selon la revendication 6, **caractérisé en ce qu'**une ligne du premier système de bus (26) réalisé sous la forme d'un système de bus PSI5 est réalisée sous la forme d'une ligne d'alimentation (26.1).

8. Architecture électrique/électronique destinée à un véhicule comportant un premier appareil de commande (20), un deuxième appareil de commande (30) et un système de capteurs (10), dans lequel les appareils de commande (20, 30) communiquent avec le système de capteurs (10) par l'intermédiaire d'au moins un système de bus (26, 36), **caractérisée en ce que** le système de capteurs (10) est réalisé selon l'une quelconque des revendications 1 à 7.

9. Architecture électrique/électronique selon la revendication 8, **caractérisée en ce que** le premier appareil de commande (20) communique avec le système de capteurs (10) par l'intermédiaire du premier système de bus (26) et **en ce que** le deuxième appareil de commande (30) communique avec le système de capteurs par l'intermédiaire du deuxième système de bus (36).

10. Architecture électrique/électronique selon la revendication 9, **caractérisée en ce que** le premier appareil de commande (20) est réalisé sous la forme d'un appareil de commande de coussin gonflable et **en ce que** le deuxième appareil de commande (30) est réalisé sous la forme d'un appareil de commande ESP.
